# FASCICULE DE BREVET EUROPEEN

(11) **EP 1 709 266 B1**
(45) Date de publication et mention de la délivrance du brevet: **02.05.2007**
(21) Numéro de dépôt: 04816405.7
(22) Date de dépôt: 16.12.2004
(51) Int. Cl.: E04H 9/02

(54) **PATIN ANTISISMIQUE, DISPOSITIF DE SUPPORT D UNE STRUCTURE ET UTILISATION**
ERDBEBENSICHERE GRUNDPLATTE, VORRICHTUNG ZUR ABSTÜTZUNG EINER STRUKTUR UND VERWENDUNG DAVON
ANTISEISMIC BASE PLATE, DEVICE FOR SUPPORTING A STRUCTURE AND USE THEREOF

(30) Priorité: 30.01.2004 FR 0400919
(43) Date de publication de la demande: 11.10.2006
(73) Titulaire: Areva NP, 92400 Courbevoie (FR)
(72) Inventeur: GEBELIN, Bernard, F-69006 Lyon (FR)
(74) Mandataire: Domenego, Bertrand
(86) Numéro de dépôt international: PCT/FR2004/003265
(87) Numéro de publication internationale: WO 2005/083206

(56) Documents cités:
- US-A- 4 917 211
- US-A- 5 599 106
- US-B1- 6 321 492

## Description

L'invention concerne un patin d'appui antisismique et un dispositif de support d'une structure, en particulier d'une structure verticale de grande hauteur pouvant être déplacée et installée sur un site industriel, en particulier dans une centrale nucléaire.

Les centrales nucléaires comportant un ou plusieurs réacteurs dans lesquels on utilise des assemblages de combustible comprennent généralement un ou plusieurs bâtiments du combustible attenant à un bâtiment de réacteur dans lesquels on réalise des opérations d'évacuation des assemblages de combustible usés, d'examen et de réparation de ces assemblages de combustible et de préparation du chargement du réacteur en assemblages neufs ou en assemblages restaurés. Le bâtiment du combustible renferme généralement une piscine de stockage du combustible usé qui peut être mise en communication avec une piscine du réacteur nucléaire. A l'intérieur de la piscine du combustible, il est généralement nécessaire de réaliser des opérations complexes d'examen et de mesure sur les assemblages de combustible usés et éventuellement des opérations de réparation et de restauration des assemblages de combustible.

Les assemblages de combustible des réacteurs nucléaires refroidis par de l'eau, en particulier les assemblages de combustible des réacteurs nucléaires refroidis par de l'eau sous pression, qui sont de forme prismatique droite et qui sont disposés verticalement dans le coeur du réacteur présentent une grande longueur et une faible section transversale, ces assemblages pouvant présenter une longueur de l'ordre de 4 m ou supérieure et une section carrée dont le côté mesure environ 0,20 m. Les crayons de combustible sont introduits dans la structure de support de l'assemblage de combustible pour constituer un faisceau occupant la plus grande partie de la longueur de l'assemblage de combustible.

Pour réaliser les opérations de contrôle, d'examen visuel ou de mesure sur les assemblages de combustible, on doit disposer d'une structure de grande hauteur (par exemple de l'ordre de 5 m) dans laquelle on introduit successivement chacun des assemblages de combustible à contrôler dans une disposition verticale, la structure de support comportant des moyens de guidage et de déplacement de dispositifs d'examen, de contrôle ou de mesure, en particulier dans la direction verticale.

L'installation de contrôle des assemblages de combustible présente une structure élancée de grande hauteur qui doit être placée à l'intérieur de la piscine du combustible, de manière à reposer sur le fond de la piscine, dans une zone prévue pour réaliser les contrôles et examens des assemblages de combustible.

Il est généralement avantageux de réaliser les installations de contrôle et d'examen des assemblages de combustible sous une forme telle qu'elles puissent être transportées d'un bâtiment du combustible à un autre, sur un même site ou sur des sites différents de centrales nucléaires. On rentabilise ainsi l'utilisation de ces installations qui ne sont mises en oeuvre que de temps en temps, au cours de l'exploitation de la centrale nucléaire, par exemple lors d'opérations de chargement et de rechargement d'assemblages de combustible dans le coeur d'un réacteur nucléaire.

Il est également souhaitable de pouvoir placer l'installation d'examen et de contrôle dans une zone de la piscine du combustible qui peut être choisie en fonction de la position de râteliers de stockage d'assemblages de combustible usés dans la piscine du combustible. On doit donc disposer de moyens de support de la structure qui soient parfaitement stables, qui permettent un réglage de la verticalité de la structure et qui comportent des moyens d'appui sur le fond de la piscine qui puissent être facilement séparés du fond de la piscine ou mis en place et réglés, pour l'installation en piscine de la structure.

Le fond de la piscine du combustible est généralement constitué par une dalle de béton recouverte d'un revêtement en acier inoxydable qui constitue la surface de support de la structure. Cette surface de support peut présenter certains défauts de planéité ou d'horizontalité, de sorte qu'on doit régler la verticalité de la structure de l'installation d'examen et de contrôle, avant sa mise en service, ce qui est nécessaire pour assurer un déplacement et un réglage satisfaisants des moyens d'examen et de contrôle.

En outre, il peut être nécessaire de prévoir un supportage antisismique de la structure de l'installation d'examen et de contrôle , afin d'éviter tout risque de renversement ou de destruction de la structure de contrôle ou d'endommagement de l'assemblage de combustible examiné, dans le cas d'un séisme pouvant avoir une magnitude importante, dans certaines zones au moins d'implantation des centrales nucléaires.

On connaît différents types de dispositif d'appui ou patin antisismique qui peuvent être utilisés pour protéger certains bâtiments, en particulier des bâtiments d'habitation ou des bâtiments industriels tels que les bâtiments d'une centrale nucléaire ou encore des ouvrages de génie civil tels que des ponts. De tels dispositifs d'appui antisismique comportent un socle d'appui qui est fixé à demeure sur une surface de support qui peut être la surface du sol, d'une fondation ou d'un élément de support d'un ouvrage de génie civil, un plateau de support et d'appui solidaire de la structure à supporter et des moyens de glissement ou de roulement intercalés entre le plateau de support et le socle d'appui.

Par exemple, comme décrit dans le US-5,599,106 et dans le WO-01/42593, on peut utiliser des éléments de roulement tels que des billes ou des rouleaux intercalés entre des plaques d'appui comportant des surfaces de roulement et de maintien des éléments de roulement. Une plaque d'appui inférieure du dispositif d'appui est fixée à demeure sur le sol ou sur un élément de génie civil. Au moins une plaque d'appui supérieure reposant sur les éléments de roulement est prévue pour se déplacer de manière limitée par rapport au socle d'appui, lors d'un séisme entraînant des sollicitations de direction quelconque.

De tels dispositifs qui sont ancrés au sol ou sur un élément de génie civil et qui restent à demeure sur le sol ou sur l'élément de génie civil ne peuvent servir de patins d'appui pour une structure transportable qui doit être mise en place de préférence en même temps que ses patins d'appui antisismique et qui doit comporter des moyens de réglage, en particulier de verticalité.

On connaît d'autre part des moyens de roulement appelés billes de manutention qui permettent de déplacer des objets pesants dans n'importe quelle direction, sur une surface d'appui ou contre une surface de guidage. De telles billes de manutention comportent un élément de roulement sphérique monté librement rotatif dans un palier à billes solidaire d'un socle d'appui de la bille de manutention sur la surface de support ou de guidage. De telles billes de manutention à très faible frottement et ayant un centre de rotation sphérique permettant des déplacements dans des directions quelconques peuvent être d'un grand intérêt dans le cas de dispositifs d'appui antisismique. Jusqu'ici de tels dispositifs étaient réservés au domaine de la manutention.

US-A-4 917 211 décrit un patin d'appui avec les caractéristiques du préambule de la revendication 1.

Le but de l'invention est donc de proposer un patin d'appui antisismique comprenant un socle d'appui et de maintien du patin sur une surface de support, au moins un élément de roulement sphérique monté librement rotatif autour d'un centre de rotation dans un palier solidaire du socle d'appui et un plateau de support reposant sur l'élément de roulement sphérique, ce patin d'appui pouvant être utilisé pour le support d'une structure transportable sans aménagement de la surface de support et avec un réglage de verticalité de la structure.

Dans ce but, le socle d'appui comporte une semelle d'appui solidaire d'un palier, réalisée de manière à reposer librement sur la surface de support et à maintenir le patin en place sans moyen de fixation sur la surface de support et le patin d'appui comporte au moins trois moyens de suspension du socle d'appui au plateau de support et de rappel élastique dans des directions radiales autour d'un axe du plateau de support sensiblement perpendiculaire à la semelle d'appui reliés, d'une part, au plateau de support et, d'autre part, à l'ensemble comportant la semelle d'appui et le palier.

L'invention est également relative à un dispositif de support d'une structure et en particulier d'une structure élancée dont on doit régler la verticalité.

Selon des modalités particulières prises isolément ou en combinaison :
- la surface d'appui concave du plateau support sur l'élément de roulement sphérique est une surface de révolution ayant l'une des formes suivantes : sphérique, conique, paraboloïdale, ellipsoïdale ;
- le patin comporte un seul élément de roulement sphérique monté rotatif dans un palier à billes ayant un centre de rotation disposé sur l'axe du plateau de support ;
- le patin comporte une pluralité d'éléments de roulement sphériques disposés chacun dans un palier, les centres de rotation des paliers étant disposés sur au moins un cercle centré sur l'axe du plateau ;
- l'un des paliers, central présente un centre de rotation suivant l'axe du plateau et les autres paliers de la pluralité de paliers sont disposés autour de l'axe, de manière que les centres de rotation des éléments de roulement sphériques des autres paliers de la pluralité de paliers soient disposés sur un cercle ayant pour centre le centre de rotation du palier central ;
- les moyens de suspension et de rappel élastique sont constitués par au moins trois ressorts hélicoïdaux reliés chacun à une première extrémité longitudinale à une partie périphérique du plateau de support et à une seconde extrémité longitudinale à une partie périphérique externe du socle d'appui disposé à l'intérieur de la partie périphérique du plateau de support, chacun des ressorts ayant une direction longitudinale sensiblement radiale par rapport au plateau et une inclinaison vers le haut, depuis la partie périphérique externe du socle d'appui vers la partie périphérique du plateau, les ressorts étant précontraints en traction, de manière à assurer le rappel élastique du socle d'appui du palier et de l'élément de roulement en position centrée par rapport à l'axe du plateau de support et une mise en contact de l'élément de roulement sphérique avec une surface intérieure d'appui du plateau, lorsque la semelle n'est pas en contact avec une surface de support, le socle d'appui étant librement suspendu au plateau par l'intermédiaire des ressorts ;
- le plateau de support comporte une partie supérieure en forme de douille ayant pour axe l'axe du plateau de support, taraudée intérieurement sur une partie au moins de sa longueur et comportant une rainure de guidage débouchant sur sa surface latérale externe ayant la direction de l'axe du plateau de support et le patin antisismique comporte de plus un arbre d'actionnement ayant une partie filetée engagée par vissage dans la partie taraudée de la douille du plateau dans la direction de l'axe du plateau et au moins une pièce de guidage et d'engagement dans laquelle l'arbre est monté rotatif autour de l'axe du plateau de support et solidaire en translation de l'au moins une pièce de guidage comportant un élément de guidage ayant un pion de guidage introduit dans la rainure de la douille du plateau pour son guidage en translation axiale, la mise en rotation de l'arbre solidaire en translation axiale de l'au moins une pièce d'engagement et de guidage dans le sens du vissage ou du dévissage à l'intérieur de l'ouverture taraudée de la douille du plateau entraînant un déplacement en translation de la pièce d'engagement et de guidage dans la direction de l'axe du plateau, par rapport au plateau de support.

L'invention est également relative à un dispositif de support d'une structure d'une installation transportable pouvant être mise en place sur une surface de support comportant au moins trois patins d'appui antisismique suivant l'invention telle que définie ci-dessus et un cadre rigide reposant sur les plateaux de support des patins antisismiques.

Le dispositif de support peut être réalisé, pour assurer le réglage de la verticalité d'une structure élancée d'une installation, solidaire du dispositif de support ; dans ce cas, il comporte au moins un patin antisismique réglable tel que décrit ci-dessus dont la pièce d'engagement et de guidage est solidaire du cadre rigide du dispositif de support et mobile en translation dans la direction de l'axe du plateau de support du patin antisismique par mise en rotation de l'arbre d'actionnement.

Le dispositif de support peut comporter un cadre d'une forme générale carrée ou rectangulaire et quatre patins antisismiques réglables fixés chacun par l'intermédiaire de la pièce d'engagement et de guidage respective à une partie d'angle du cadre.

L'invention est également relative à l'utilisation d'un dispositif de support suivant l'invention pour le support d'une installation d'examen et de contrôle d'assemblages de combustible nucléaire dans une piscine d'une centrale nucléaire, l'installation étant totalement autonome et pouvant être installée sans aménagement dans la piscine de la centrale nucléaire, du fait qu'elle est destinée à reposer sur le fond de la piscine par l'intermédiaire des semelles des dispositifs de support et qu'elle comporte des moyens propres pour la manutention des assemblages de combustible, permettant de s'affranchir de tout moyen de manutention d'assemblages de combustible de la centrale nucléaire.

Afin de bien faire comprendre l'invention, on va maintenant décrire, à titre d'exemple, en se référant aux figures jointes en annexe, une structure d'une installation d'examen et de contrôle d'assemblages de combustible et ses moyens de support sur le fond d'une piscine, comportant des patins d'appui antisismique suivant l'invention.
La figure 1 est une vue en élévation de l'installation d'examen et de contrôle d'assemblages de combustible reposant sur le fond d'une piscine d'une centrale nucléaire.
La figure 2 est une vue de dessus de l'installation représentée sur la figure 1.
La figure 3 est une vue en coupe verticale partielle d'un patin d'appui antisismique d'un dispositif de support de l'installation représentée sur les figures 1 et 2.
La figure 4 est une vue de dessus du patin d'appui antisismique représenté sur la figure 3.
La figure 5 est une vue en coupe verticale partielle, analogue à la vue de la figure 3, d'un patin antisismique suivant une variante de réalisation.
La figure 6 est une vue de dessus du patin antisismique représenté sur la figure 5.

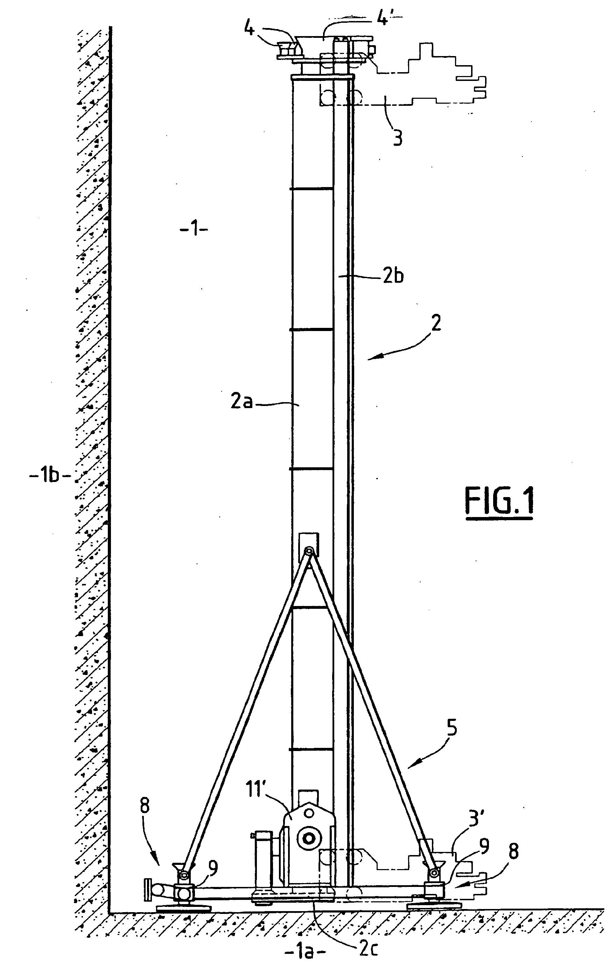

Sur la figure 1, on a représenté, à l'intérieur d'une partie d'une piscine du combustible 1 d'une centrale nucléaire, une installation 2 de contrôle et d'examen d'assemblages de combustible.

La piscine 1 comporte un fond 1a horizontal et une paroi verticale 1b constituée par des parois en béton revêtues de tôles en acier inoxydable.

L'installation 2 d'examen et de contrôle d'assemblages de combustible comporte une structure verticale 2a élancée, c'est-à-dire présentant une hauteur très supérieure à ses dimensions transversales, destinée à recevoir des assemblages de combustible en position verticale. Suivant la hauteur de la structure verticale 2a sont disposés en particulier des moyens 2b de guidage et de déplacement d'un ensemble 3 portant des moyens d'examen, de contrôle et/ou de mesure des assemblages de combustible introduits dans la structure 2a par sa partie supérieure. L'installation peut également comporter des moyens propres de manutention d'assemblages de combustible la rendant autonome et indépendante des moyens de manutention de la centrale nucléaire. Dans ce cas, l'installation permet de s'affranchir de tout moyen de manutention d'assemblages de combustible de la centrale nucléaire (par exemple pont-passerelle) pour effectuer l'examen d'assemblages de combustible. Cette étape n'est plus alors sur le chemin critique des opérations effectuées lors d'un arrêt de tranche de la centrale nucléaire.

Sur la figure 1, on a représenté le dispositif mobile d'examen 3, dans sa position supérieure 3, et dans sa position inférieure 3', au voisinage du fond de la piscine, le déplacement du dispositif d'examen 3 entre ses positions 3 et 3' permettant de réaliser des contrôles, examens ou mesures sur toutes les parties de l'assemblage de combustible introduit dans la structure verticale 2a.

A sa partie supérieure, la structure 2a comporte des moyens 4 et 4' de guidage d'outils d'intervention à l'intérieur de la piscine et d'introduction d'un assemblage de combustible dans la structure 2a de l'installation 2.

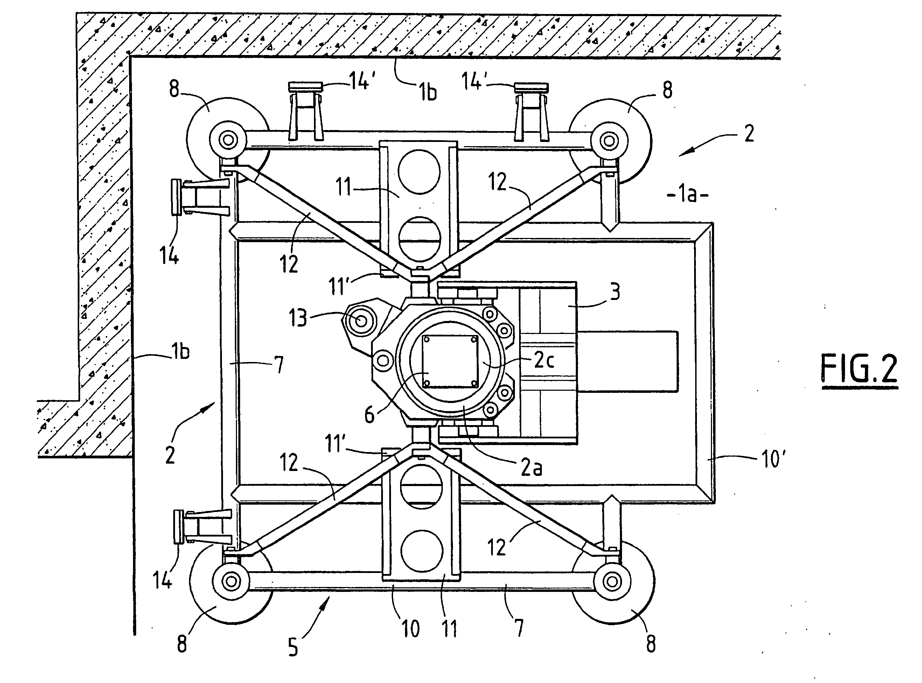

Sur la figure 2, on a représenté un assemblage de combustible 6 de forme prismatique droite à section carrée introduit, dans une position permettant le contrôle et l'examen, dans la structure verticale 2a de l'installation 2 qui présente une forme générale cylindrique et une section circulaire. L'assemblage de combustible repose sur un socle 2c rotatif autour d'un axe vertical, à la partie inférieure de la structure verticale 2a.

L'installation 2 comporte de plus un ensemble 5 de support de la structure verticale 2a reposant sur la surface horizontale du fond 1a de la piscine 1, par l'intermédiaire de patins antisismiques 8.

Comme il est visible en particulier sur la figure 2, le dispositif de support 8 comporte un châssis en tubes (ou en tous autres profilés assemblés) ayant une disposition horizontale et reposant sur les patins antisismiques 8. Le cadre du dispositif de support 5 comporte en particulier des éléments tubulaires 7 reliés à leurs extrémités à des douilles 9 de fixation du cadre du dispositif de support 5 sur les patins antisismiques 8. Les éléments tubulaires 7 sont reliés deux à deux par leurs extrémités, à une douille de fixation sur un patin antisismique 8, de telle sorte que la structure repose sur le fond de la piscine, par l'intermédiaire d'un patin antisismique 8, au niveau de chacun des angles du cadre de forme carrée désigné dans son ensemble par le repère 10.

L'un des éléments tubulaires 7 du cadre rigide de forme carrée 10 est interrompu suivant sa partie centrale et ne comporte que deux parties d'extrémité qui sont reliées à un cadre rectangulaire 10' solidaire du cadre 10 et assurant, avec le cadre 10, le support de la structure 2a. Des équerres de support 11 reposent par une partie horizontale sur les cadres 10 et 10' de part et d'autre de la structure verticale 2a et comportent des montants 11' sur lesquels la structure verticale 2a repose à sa partie inférieure, par l'intermédiaire de tourillons horizontaux engagés dans les montants 11'.

Le dispositif de support 5 comporte également quatre barres de support inclinées 12 qui peuvent être de forme tubulaire qui sont reliées, à l'une de leurs extrémités, à un patin antisismique et, à leur autre extrémité, à un tourillon horizontal solidaire d'une partie de la structure verticale 2a. Sur chacun des tourillons horizontaux solidaires de la structure verticale 2a sont engagées les parties d'extrémité de deux barres de maintien inclinées 12 dont les secondes extrémités sont reliées chacune à un patin antisismique 8. Les tourillons de fixation des barres inclinées 12 sont fixées sur la structure verticale 2a à un niveau situé sensiblement au-dessus du niveau inférieur de la structure verticale 2a, par exemple à un niveau situé entre un tiers et la moitié de la hauteur totale de la structure verticale 2a. On obtient ainsi une fixation stable de la structure verticale élancée 2a sur le dispositif de support 5 de l'installation de contrôle 2.

Comme il est visible sur la figure 2, la structure verticale 2a comporte une partie centrale de forme cylindrique à section circulaire dans laquelle est engagé l'assemblage de combustible 6 à contrôler, dont l'axe est vertical ; à l'intérieur de cette partie cylindrique de la structure verticale 2a, l'assemblage de combustible est monté rotatif autour de son axe vertical sur le socle rotatif 2c porté par le dispositif de support 5. Un ensemble motorisé 13 permet de mettre en rotation le socle rotatif 2c autour d'un axe vertical, de manière à présenter chacune des faces latérales de l'assemblage de combustible, successivement en regard du dispositif d'examen et de contrôle 3.

Sur deux des éléments tubulaires 7 du cadre 10 sont montées, dans des dispositions latérales, des butées d'appui 14 et 14' de l'installation d'examen et de contrôle 2 contre deux parois de la piscine à 90° telles que les parois 1b. Le dispositif d'examen et de contrôle 2 peut être mis en place en un endroit quelconque du fond 1a de la piscine et en particulier au voisinage d'une paroi verticale 1b, avec ou sans appui des butées 14 contre la paroi verticale.

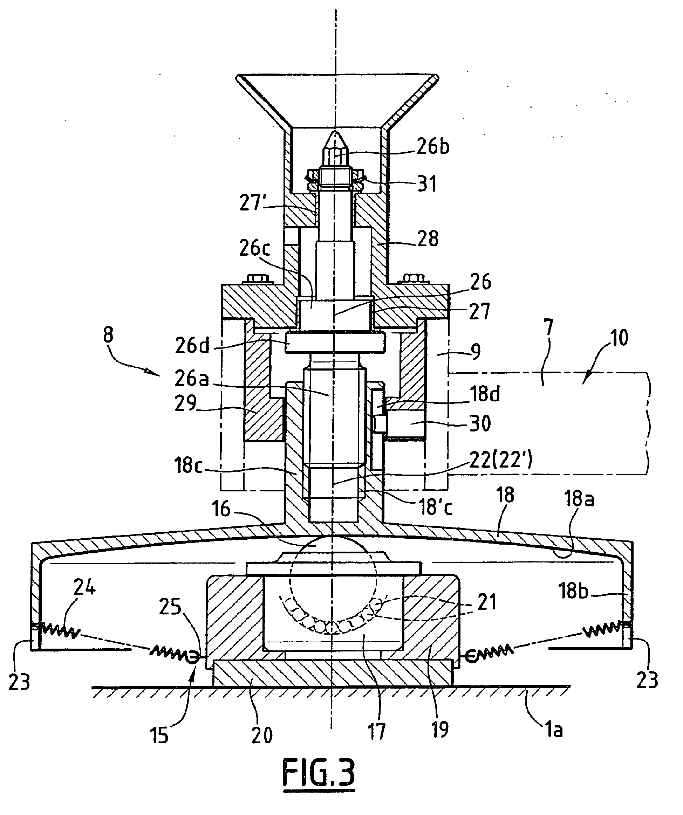

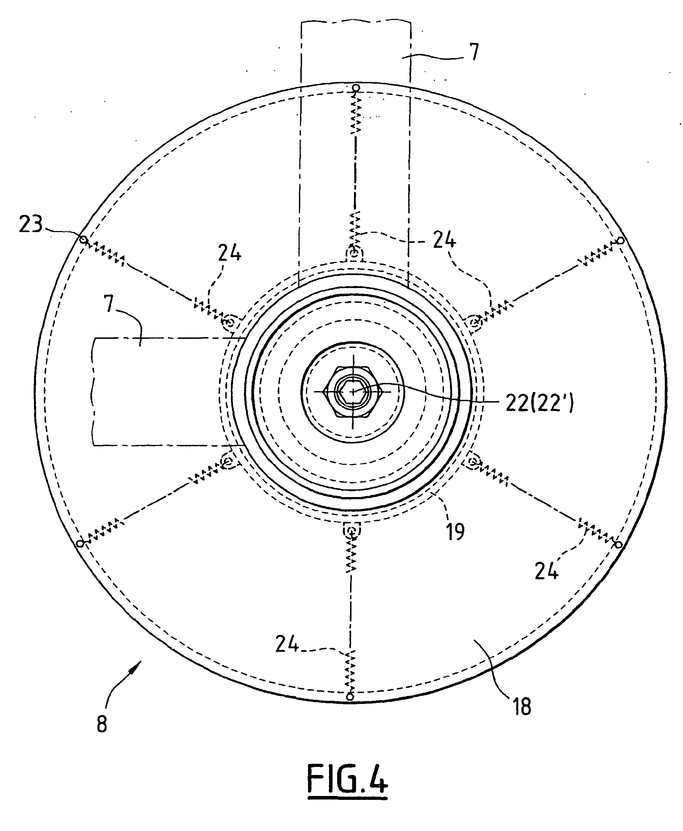

Sur les figures 3 et 4, on a représenté un patin d'appui antisismique du dispositif de support 5 de l'installation 2, respectivement, dans une vue en coupe verticale partielle et dans une vue de dessus.

Le patin antisismique 8 comporte en particulier un socle d'appui 15 reposant sur le fond 1a de la piscine, un élément de roulement sphérique 16 monté librement rotatif autour d'un centre de rotation sphérique à l'intérieur d'un palier à billes 17 solidaire du socle 15 et un plateau de support 18 reposant sur l'élément de roulement 16 par une surface interne d'appui 18a concave en forme de calotte sphérique à grand rayon de courbure.

La surface interne d'appui 18a du support 18 peut présenter d'autres formes qu'une forme sphérique et par exemple une forme conique, ellipsoïdale ou paraboloïdale. Toute surface concave symétrique de révolution peut être envisagée. Une telle forme de la surface d'appui 16a doit permettre un rappel du plateau de support en l'absence de sollicitation latérale, dans une position telle que l'axe de révolution de la surface d'appui soit situé suivant l'axe vertical du patin.

Selon l'invention, le socle d'appui 15 comporte en particulier une semelle d'appui 20 destinée à reposer librement sur le fond 1a de la piscine et à maintenir en place le patin antisismique 8 supportant l'installation d'examen et de contrôle 2, sans moyen de fixation sur le fond de la piscine. La semelle d'appui 20 est réalisée en un matériau présentant un fort coefficient de frottement sur la surface de support du fond 1a constituée généralement par une tôle d'acier inoxydable. Par exemple, la semelle d'appui 20 peut être réalisée en un polymère dont le coefficient de frottement sur une surface en acier inoxydable est d'au moins 0,5. Dans ce cas, le poids en eau de la structure étant de 1300 daN environ, la résistance au glissement de l'ensemble des patins en contact avec le sol est d'à peu près 650 daN.

Sur la semelle 20 est fixé un support 19 destiné à assurer le montage du palier à billes 17 dans lequel la bille 16 est montée librement rotative autour de son centre. Le socle d'appui 15 comporte l'ensemble constitué par la semelle 20, le support 19 et le palier à billes 17 assemblés de manière rigidement solidaire.

Le palier à billes 17 comporte une cuvette ayant une surface concave sensiblement hémisphérique dans laquelle sont disposées des rangées de billes de roulement 21 séparées les unes des autres par des éléments de cage de roulement, suivant des secteurs de la surface hémisphérique. L'élément de roulement 16 constitué par un corps sphérique rigide et résistant en acier repose sur les billes de roulement 21, la cavité du palier hémisphérique 17 ayant un rayon supérieur au rayon de l'élément sphérique 16 d'une longueur sensiblement égale au diamètre des billes 21, de sorte que l'élément sphérique 16 et la cavité hémisphérique du palier 17 présentent un même centre qui est le centre de rotation libre de l'élément sphérique 16 dans le palier à billes 17. L'axe 22 du patin antisismique 8 est l'axe du patin 17 passant par le centre de la cavité hémisphérique et perpendiculaire à la surface d'appui de la semelle 20 sur la surface de support 1 a. Cet axe est vertical lorsque la surface 1a est parfaitement horizontale, comme représenté sur la figure 3.

Au lieu d'un palier à billes à cuvette hémisphérique, on peut envisager l'utilisation de toute surface concave dans laquelle l'élément de roulement sphérique peut se déplacer en contact avec des moyens de roulement d'un ou plusieurs paliers ou directement en contact avec la surface concave du palier. Une telle surface de contact peut être par exemple de forme conique, ellipsoïdale ou paraboloïdale. Dans tous les cas, la surface du palier assure un maintien de l'élément sphérique de roulement avec son centre sur l'axe du palier ou un rappel de l'élément de roulement tel que son centre se trouve sur l'axe de la surface concave en l'absence de sollicitation latérale. Les dimensions transversales de la surface concave du palier dans le cas où l'élément sphérique se déplace librement sur cette surface concave doivent être suffisantes pour permettre le maintien de l'élément sphérique sur la surface concave du palier pour les plus grandes magnitudes de séisme prévisibles.

Le plateau de support 18 comporte une partie en forme de disque constituant le plateau proprement dit dont la surface intérieure 18a en forme de calotte sphérique vient en contact avec l'élément sphérique librement rotatif 16 sur lequel repose le plateau 18. A la périphérie de sa partie en forme de disque, le plateau 18 comporte un rebord 18b cylindrique ayant pour axe l'axe 22' du plateau 18 qui est disposé sur la figure 3 suivant l'axe vertical 22 du patin 8, c'est-à-dire l'axe du palier à billes 17a perpendiculaire à la surface 1a. A sa partie inférieure, la partie périphérique 18b du plateau 18 de forme cylindrique comporte des ouvertures 23 d'accrochage d'une première extrémité de ressorts hélicoïdaux 24 dont la seconde extrémité est reliée à une patte d'accrochage 25 en saillie par rapport à la surface périphérique externe de l'élément 19 de fixation du palier 17 solidaire de la semelle d'appui 20.

Comme il est visible sur la figure 4, six ressorts 24 sont disposés dans des directions radiales autour de l'axe 22 du patin antisismique 8, de manière que les directions longitudinales de traction de deux ressorts 24 successifs fassent entre elles un angle d'à peu près 60°.

Les ouvertures 23 de fixation de la première extrémité des ressorts 24 sur le bord périphérique interne du plateau 18 sont réparties à des distances constantes suivant la périphérie du plateau 18 et de même les pattes 25 d'accrochage des secondes extrémités des ressorts 24 sont réparties à des distances régulières sur la périphérie externe de la pièce 19 de fixation du palier 17 solidaire de la semelle d'appui 20.

Les ressorts 24 qui sont précontraints en traction au montage assurent un rappel du socle d'appui 15, du palier à billes 17 et de l'élément de roulement sphérique 16 en direction de l'axe 22' du plateau de support 18, lorsque la semelle 20 n'est pas en contact avec une surface de support 1a, l'ensemble comportant le socle d'appui 15, le palier 17 et l'élément sphérique 16 étant alors suspendu en dessous du plateau de support 18. De préférence, les ressorts 24 sont légèrement inclinés par rapport au plan horizontal, de manière que la direction longitudinale de traction des ressorts 24 soit dirigée vers le haut vers l'extérieur, c'est-à-dire dans la direction allant du socle d'appui 15 vers le bord périphérique 18b du plateau 18.

Lorsque la semelle d'appui 20 n'est pas en contact avec une surface de support, par exemple pendant le transport et la manutention de l'installation d'examen et de contrôle 2 en position verticale avant sa dépose sur le fond de la piscine, l'ensemble constitué par le socle d'appui 15, le palier 17 et l'élément de roulement sphérique 16 est rappelé par les ressorts 24 dans une position telle que le socle d'appui 15 et le palier à billes 17 présentent un axe vertical suivant l'axe 22' du plateau 18, l'élément sphérique 16 ayant son centre sur cet axe 22' et étant maintenu en contact avec la surface d'appui 18a du plateau 18, suivant l'axe 22'. La surface d'appui de la semelle d'appui 20 est alors perpendiculaire à l'axe 22' du plateau 18.

Lors d'un séisme, le plateau support 18 se déplace par rapport au socle 15 sous l'effet de sollicitations latérales. Le diamètre ou, de manière plus générale, les dimensions transversales de la surface interne d'appui du plateau support sont tels que, lors d'un déplacement du plateau support par rapport au palier, sous l'effet d'un séisme, la surface d'appui du plateau reste en contact avec l'élément de roulement sphérique. Le rebord 18b du plateau permet, dans le cas d'un séisme de très forte magnitude, de maintenir le plateau engagé sur le socle 15, par effet de butée.

Le plateau 18 comporte une partie supérieure en forme de douille ayant pour axe l'axe 22' du plateau, prolongeant la partie supérieure centrale du plateau sur une certaine hauteur dans la direction de l'axe 22'. La douille 18c comporte une partie taraudée interne 18'c s'étendant pratiquement sur toute la longueur de son alésage d'axe 22' et une lumière de guidage longitudinale 18d parallèle à l'axe 22 débouchant sur la surface latérale de la douille 18c et s'étendant sur une partie de la longueur de la douille 18c.

Un arbre 26 présentant une partie filetée inférieure 26a dont le filetage correspond au filetage de la partie taraudée 18'c de la douille 18c est engagé par vissage à l'intérieur de l'alésage taraudé 18'c de la douille 18c du plateau 18. A son extrémité opposée à sa partie filetée 26a, l'arbre 26 comporte une partie profilée 26b, par exemple à section hexagonale. L'axe de l'arbre 26 est disposé suivant l'axe 22' du plateau 18, lorsque l'arbre 26 est vissé par sa partie filetée 26a dans l'alésage taraudé 18'c de la douille 18c.

Dans sa partie centrale, entre sa partie filetée et sa partie profilée d'extrémité 26b, l'arbre 26 comporte deux parties cylindriques élargies diamétralement 26c et 26d, la partie 26c étant entourée par une garniture de palier lisse 27 qui est retenue axialement par la partie élargie 26d. Le palier lisse 27 à la périphérie de la partie 26c de l'arbre 26 est introduit dans une partie de l'alésage interne d'une pièce d'engagement tubulaire 28 rigidement solidaire d'une pièce de maintien et de guidage 29 de forme tubulaire, les pièces 28 et 29 étant maintenues grâce au palier lisse 27 autour de la partie 26c de l'arbre 26 et à un second palier lisse 27', dans une disposition coaxiale par rapport à l'arbre 26, lui-même engagé dans une disposition coaxiale dans l'alésage taraudé 18'c du plateau 18.

La pièce de guidage 29 comporte un élément de guidage 30 fixé dans une disposition radiale comportant un doigt de guidage engagé à glissement dans la rainure 18d de la douille 18c du plateau 18.

Un ensemble d'écrous et de rondelles 31 vissé sur une partie de l'arbre 26 adjacente à la partie profilée 26b assure le maintien d'une partie d'extrémité du second palier lisse 27' contre la pièce 28 et, par l'intermédiaire de la partie élargie 26d et du palier 27 de l'arbre 26 contre la surface inférieure de la pièce 28. L'arbre 26 est ainsi monté solidaire des pièces 28 et 29 en translation dans la direction de l'axe 22 et libre en rotation par rapport à la pièce 28, par l'intermédiaire des paliers lisses 27 et 27'.

Lorsqu'on met en rotation l'arbre 26, en utilisant un outil solidaire de l'extrémité d'une perche en prise avec l'élément profilé 26b, on produit, suivant le sens de mise en rotation de l'arbre 26, le vissage ou le dévissage de la partie filetée 26a de l'arbre 26 dans l'alésage taraudé 18'c du plateau 18. La pièce de guidage 29 solidaire de la pièce 28 elle-même solidaire de l'arbre 26 en translation ne peut tourner et le plateau 18 est immobile en rotation du fait de l'engagement du doigt de guidage 20 dans la rainure 18d. L'ensemble des pièces 28 et 29 se déplace en translation dans la direction de l'axe 22.

Sur les figures 3 et 4, on a représenté en traits mixtes les éléments tubulaires 7 et la manchette de liaison 9 du cadre 10 d'un dispositif de support 5 d'une installation d'examen et de contrôle telle que représentée sur les figures 1 et 2.

Le cadre 10 du dispositif de support 5 de l'installation est relié, suivant chacun de ses angles, par l'intermédiaire d'une manchette 9, à la pièce de guidage 29 et à la pièce 28 d'engagement et de montage tourillonnant de l'arbre 26 d'un patin antisismique 8. De cette manière, lorsque le patin antisismique 8 repose par l'intermédiaire de sa semelle d'appui 20 sur une surface de support 1a, on peut déplacer, en faisant tourner l'arbre 26 dans un sens ou dans l'autre, une partie d'angle du dispositif de support dans la direction verticale, soit vers le haut soit vers le bas. On peut ainsi régler l'inclinaison du cadre 10 du support 5 et donc l'inclinaison de la structure verticale 2a de l'installation 2. L'axe 22' des pièces 28 et 29 d'engagement et de guidage du palier antisismique 8 s'incline par rapport à la direction de l'axe 22 du socle 15 et du plateau 17 qui est généralement verticale. La douille 18c du plateau 18 du patin antisismique qui est engagée avec un très faible jeu à l'intérieur de la pièce de guidage 29 et dont la rainure 18d est en prise avec le doigt de l'élément de guidage 30 de la pièce 29 doit pivoter avec la pièce 29, par rapport à l'axe du socle d'appui 15 perpendiculaire à la surface d'appui de la semelle 20 et du palier 17, ce qui est possible, du fait que le plateau est relié au socle d'appui 15 uniquement par les ressorts 24 et repose sur l'élément sphérique de roulement 16.

Dans le cas où la surface de support 1a n'est pas parfaitement horizontale ou comporte des parties inclinées par rapport au plan horizontal, la semelle d'appui 20 des patins antisismiques ou de certains patins antisismiques est susceptible de se placer dans une position qui n'est pas parfaitement horizontale de sorte que l'axe 22 du socle d'appui 15 et du palier 17 n'est pas parfaitement vertical. Dans ce cas, il se produit un désalignement de l'axe 22' des plateaux 18 des patins antisismiques 8 de l'installation d'examen et de contrôle 2 ou de certains patins antisismiques au moins, par rapport à l'axe 22 du palier à billes perpendiculaire à la semelle d'appui des patins correspondants 8. Ce désaxement d'adaptation lors de la dépose de l'installation comportant les patins antisismiques est possible pour chaque patin, grâce au montage flottant du plateau 18 sur l'élément de roulement 16 et à la liaison au socle d'appui 15, uniquement par l'intermédiaire des ressorts.

Pour la mise en place de l'installation 2 telle que représentée sur les figures 1 et 2 sur le fond 1a de la piscine 1 de la centrale nucléaire, on utilise un moyen de transport et de manutention qui est déplacé à l'intérieur de la piscine 1 jusqu'à l'aplomb de l'emplacement sur lequel on doit déposer l'installation d'examen et de contrôle 2. Grâce au dispositif de manutention, on fait descendre l'installation à la verticale jusqu'au moment où les patins antisismiques 8 viennent en contact avec la surface de support 1a du fond de la piscine par l'intermédiaire de leurs semelles d'appui. Comme expliqué plus haut, dans le cas où la surface du fond 1a de la piscine présente des défauts d'horizontalité, les patins antisismiques 8 peuvent compenser aisément ces défauts d'horizontalité grâce au montage flottant des plateaux 18 sur les socles d'appui 15, par l'intermédiaire des éléments de roulement 16.

Les semelles d'appui 20 des quatre patins antisismiques 8 viennent donc reposer parfaitement sur la surface de support du fond 1 a de la piscine 1.

Pendant le transport de l'installation 2 fixée au moyen de manutention, les socles d'appui 15 des patins antisismiques sont suspendus aux plateaux 18 de ces patins par l'intermédiaire des ressorts qui assurent un rappel du socle d'appui et du palier dans une position centrée, c'est-à-dire telle que l'axe 22 du palier à billes perpendiculaire à la semelle d'appui 20 soit disposé suivant l'axe 22' du plateau 18, pour chacun des patins antisismiques, l'élément de roulement 16 étant de plus maintenu en contact avec la surface inférieure d'appui du plateau 18. On réalise donc la dépose de l'installation avec ses patins d'appui dans des orientations idéales par rapport au dispositif de support.

Lorsque l'installation 2 a été déposée sur le fond de la piscine par l'intermédiaire de ses patins d'appui 8, on contrôle la verticalité de la structure 2a, par exemple grâce à un inclinomètre et on règle l'inclinaison de la structure verticale, de manière que son axe soit parfaitement vertical en réglant l'inclinaison du dispositif de support 5. Ce réglage est effectué par réglage en hauteur des patins antisismiques 8, comme il a été indiqué plus haut. On obtient ainsi une parfaite mise en place et un parfait réglage de verticalité de l'installation d'examen et de contrôle 2.

Lors d'un séisme, des sollicitations latérales horizontales sont exercées sur la structure 2a de l'installation reposant sur les patins d'appui antisismique 8. Les plateaux supports 18 des patins d'appui 8 se déplacent par rapport aux socles correspondants par roulement sur l'élément sphérique 16 respectif puis reviennent par gravité vers la position d'équilibre. Les sollicitations latérales peuvent être ainsi supportées sans dommage par la structure de l'installation, par exemple pour des accélérations prises en compte dans le cas des centrales nucléaires françaises. Dans ce cas, on considère que le spectre de plancher (au niveau du fond de la piscine du combustible) des accélérations en cas de séisme présente des accélérations ZPA (en anglais "Zero Period Acceleration", c'est-à-dire à fréquence infinie) comprises entre 0,2 et 0,4 g (g : accélération de la pesanteur), ces valeurs résultant d'un spectre au niveau du sol ayant des accélérations ZPA comprises entre 0,1 et 0,3 g.

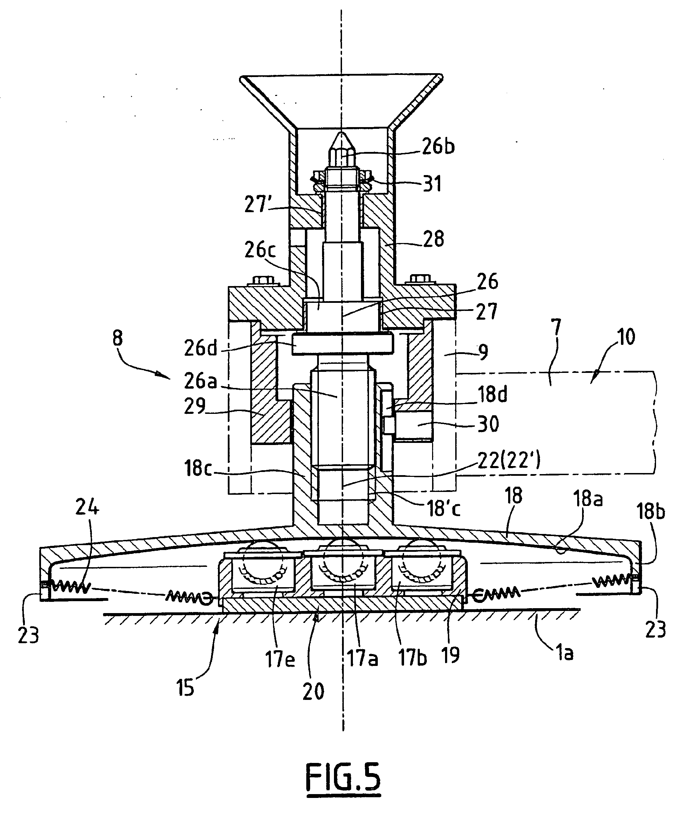

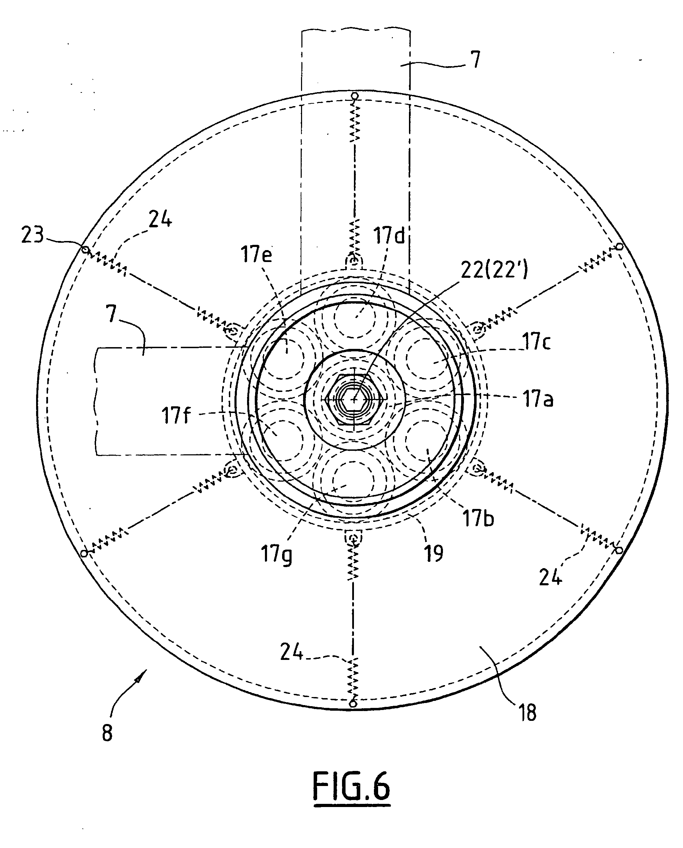

Sur les figures 5 et 6, on a représenté une variante de réalisation d'un patin antisismique suivant l'invention qui peut être utilisé pour l'appui et le réglage d'une structure verticale élancée telle qu'une installation d'examen et de contrôle d'assemblages de combustible.

Les éléments correspondants sur les figures 5 et 6 et sur les figures 3 et 4 portent les mêmes repères.

Le dispositif suivant la variante représentée sur les figures 5 et 6 ne diffère du dispositif représenté sur les figures 3 et 4 qui vient d'être décrit que par le fait que le plateau 18 repose sur une pluralité d'éléments de roulement sphériques au lieu de reposer sur un seul élément sphérique 16.

Sur les figures 5 et 6, on a représenté un mode de réalisation dans lequel la semelle d'appui 20 du socle d'appui 15 est solidaire d'un support 19 permettant le montage de sept paliers à billes 17a, 17b, 17c, 17d, 17e, 17f et 17g comportant des éléments sphériques de roulement correspondants 16a, 16b, 16c, 16d, 16e, 16f et 16g sur lesquels repose le plateau 18 par sa surface inférieure sphérique concave 18a.

Le palier à billes 17a est disposé à la partie centrale du support 19, avec son centre de rotation suivant l'axe 22 du palier antisismique et les six autres paliers à billes dans des dispositions à 60° autour de l'axe 22 du patin et autour du palier central 17a. Les éléments de roulement sphériques correspondants 16a à 16g sont montés librement rotatifs dans le palier central 17a et dans les paliers périphériques dont les centres sont disposés respectivement suivant l'axe 22 du patin et sur un cercle ayant pour centre le centre de rotation du palier central (17a).

Le fonctionnement du dispositif représenté sur les figures 5 et 6 est identique au fonctionnement du dispositif à un seul palier et à un seul élément de roulement qui a été décrit plus haut.

L'invention ne se limite pas strictement aux modes de réalisation qui ont été décrits.

C'est ainsi qu'on peut envisager des patins antisismiques comportant un nombre de paliers et d'éléments sphériques de support différent de 1 ou 7 et par exemple des dispositifs à quatre paliers et quatre éléments de roulement sphériques, l'un des paliers et son élément de roulement sphérique étant disposé suivant l'axe du patin antisismique et les trois autres paliers et éléments de roulement sphériques étant disposés à 120° autour du palier de l'élément de roulement central. Dans tous les cas, les centres de rotation des paliers de roulement sont disposés sur au moins un cercle centré sur l'axe du palier ou sur l'axe lui-même (cercle de rayon nul).

Au lieu de ressorts hélicoïdaux de suspension et de rappel élastique, on peut utiliser d'autres dispositifs assurant les mêmes fonctions.

Le patin antisismique suivant l'invention peut être utilisé pour le support de structures différentes de structures verticales dont on doit régler la verticalité. Dans ce cas, les patins antisismiques ne comportent pas de moyen de réglage en hauteur.

Chaque patin antisismique comporte au moins trois moyens de rappel répartis autour de l'axe du plateau de support et le dispositif de support comcomporte au moins trois patins d'appui non alignés. Dans le cas d'un support d'une structure dont on peut régler la verticalité, au moins l'un des patins antisismiques comporte une pièce réglable en hauteur dans la direction de l'axe du plateau de support.

Le patin antisismique suivant l'invention peut être utilisé pour le support de structures transportables, dans des domaines différents de l'industrie nucléaire et par exemple dans le domaine de la construction et des travaux publics.

## Revendications

1. Patin d'appui antisismique comprenant un socle d'appui et de maintien (15) du patin (8) sur une surface de support (1a), au moins un élément de roulement sphérique (16) monté librement rotatif autour d'un centre de rotation dans un palier (17) solidaire du socle d'appui (15) et un plateau de support (18) reposant sur l'élément de roulement sphérique (16) par l'intermédiaire d'une surface d'appui (18a) concave, **caractérisé par le fait que** le socle d'appui (15) comporte une semelle d'appui (20) solidaire d'au moins un palier (17), réalisée de manière à reposer librement sur la surface de support (1a) et à maintenir le patin (8) en place sans moyen de fixation sur la surface de support (1a), et que le patin d'appui (8) comporte des moyens (24) de suspension du socle d'appui (15) au plateau de support (18) et de rappel élastique dans des directions radiales autour d'un axe (22') du plateau de support (18) sensiblement perpendiculaire à la semelle d'appui (20) reliés, d'une part, au plateau de support (18) et, d'autre part, au socle d'appui (15) comportant la semelle d'appui (20) et le palier (17).

2. Patin d'appui suivant la revendication 1, **caractérisé par le fait que** la surface d'appui concave (18a) du plateau support (18) sur l'élément de roulement sphérique (16) est une surface de révolution ayant l'une des formes suivantes : sphérique, conique, paraboloïdale, ellipsoïdale.

3. Patin d'appui antisismique suivant l'une quelconque des revendications 1 et 2, **caractérisé par le fait qu'**il comporte un seul élément de roulement sphérique (16) monté rotatif dans un palier à billes (17) ayant un centre de rotation disposé sur l'axe (22') du plateau de support (18).

4. Patin d'appui antisismique suivant l'une quelconque des revendications 1 et 2, **caractérisé par le fait qu'**il comporte une pluralité d'éléments de roulement sphériques (16a, 16b, 16c, 16d, 16e, 16f, 16g) disposés chacun dans un palier (17a, 17b, 17c, 17d, 17e, 17f, 17g), les centres de rotation des paliers (17a, 17b, 17c, 17d, 17e, 17f, 17g) étant disposés sur au moins un cercle centré sur l'axe (22') du plateau (18).

5. Patin d'appui antisismique suivant la revendication 4, **caractérisé par le fait que** l'un des paliers, central (17a) présente un centre de rotation suivant l'axe (22') du plateau (18) et les autres paliers de la pluralité de paliers (17a, 17b, 17c, 17d, 17e, 17f, 17g) sont disposés autour de l'axe (22'), de manière que les centres de rotation des éléments de roulement sphériques (16b, 16g) des autres paliers de la pluralité de paliers soient disposés sur un cercle ayant pour centre le centre de rotation du palier central (17a).

6. Patin suivant l'une quelconque des revendications 1 à 5, **caractérisé par le fait que** les moyens de suspension et de rappel élastique (24) sont constitués par au moins trois ressorts hélicoïdaux (24) reliés chacun à une première extrémité longitudinale à une partie périphérique (18b) du plateau de support (18) et à une seconde extrémité longitudinale à une partie périphérique externe du socle d'appui (15) disposé à l'intérieur de la partie périphérique (18b) du plateau de support (18), chacun des ressorts (24) ayant une direction longitudinale sensiblement radiale par rapport au plateau (18) et une inclinaison vers le haut, depuis la partie périphérique externe du socle d'appui (15) vers la partie périphérique (18b) du plateau (18), les ressorts (24) étant précontraints en traction, de manière à assurer le rappel élastique du socle d'appui (15) du palier (17) et de l'élément de roulement (16) en position centrée par rapport à l'axe (22') du plateau de support (18) et une mise en contact de l'élément de roulement sphérique (16) avec une surface intérieure d'appui (18a) du plateau (18), lorsque la semelle (20) n'est pas en contact avec une surface de support (1a), le socle d'appui (15) étant librement suspendu au plateau (18) par l'intermédiaire des ressorts (24).

7. Patin antisismique suivant l'une quelconque des revendications 1 à 6, **caractérisé par le fait que** le plateau de support (18) comporte une partie supérieure (18c) en forme de douille ayant pour axe l'axe (22') du plateau de support (18), taraudée intérieurement sur une partie au moins de sa longueur et comportant une rainure de guidage (18d) débouchant sur sa surface latérale externe ayant la direction de l'axe (22') du plateau de support (18) et que le patin antisismique (8) comporte de plus un arbre d'actionnement (26) ayant une partie filetée (26a) engagée par vissage dans la partie taraudée (18'c) de la douille (18c) du plateau (18) dans la direction de l'axe (22) du plateau et au moins une pièce de guidage et d'engagement (28, 29) dans laquelle l'arbre (26) est monté rotatif autour de l'axe (22') du plateau de support (18) et solidaire en translation de l'au moins une pièce de guidage (28, 29) comportant un élément de guidage (30) ayant un pion de guidage introduit dans la rainure (18d) de la douille (18c) du plateau (18) pour son guidage en translation axiale, la mise en rotation de l'arbre (26) solidaire en translation axiale de l'au moins une pièce d'engagement et de guidage (28, 29) dans le sens du vissage ou du dévissage à l'intérieur de l'ouverture taraudée (18'c) de la douille (18c) du plateau entraînant un déplacement en translation de la pièce d'engagement et de guidage (28, 29) dans la direction de l'axe (22') du plateau, par rapport au plateau de support (18).

8. Dispositif de support (5) d'une structure (2a) d'une installation (2) transportable pouvant être mise en place sur une surface de support (1a), **caractérisé par le fait qu'**il comporte au moins trois patins d'appui antisismique (8) suivant l'une quelconque des revendications 1 à 7 et un cadre rigide (10) reposant sur les plateaux de support (18) des patins antisismiques (8).

9. Dispositif de support (5) suivant la revendication 8 permettant le réglage de la verticalité d'une structure élancée (2a) d'une installation (2), solidaire du dispositif de support (5), **caractérisé par le fait qu'**il comporte au moins un patin antisismique (8) réglable selon la revendication 7 dont la pièce d'engagement et de guidage (28, 29) est solidaire du cadre rigide (10) du dispositif de support (5) et mobile en translation dans la direction de l'axe (22') du plateau de support (18) du patin antisismique (8) par mise en rotation de l'arbre d'actionnement (26).

10. Dispositif de support (5) suivant la revendication 9, **caractérisé par le fait qu'**il comporte un cadre (10) de forme générale carrée ou rectangulaire et quatre patins antisismiques réglables (8) fixés chacun par l'intermédiaire de la pièce d'engagement et de guidage (28, 29) respective à une partie d'angle du cadre (10).

11. Utilisation d'un dispositif de support suivant l'une quelconque des revendications 8 à 10 pour le support d'une installation (2) d'examen et de contrôle d'assemblages de combustible nucléaire dans une piscine (1) d'une centrale nucléaire, l'installation (1) étant totalement autonome et pouvant être installée sans aménagement dans la piscine (1) de la centrale nucléaire, du fait qu'elle est destinée à reposer sur le fond de la piscine (1) par l'intermédiaire des semelles (20) des dispositifs de support (5) et qu'elle comporte des moyens propres (3) pour la manutention des assemblages de combustible, permettant de s'affranchir de tout moyen de manutention d'assemblages de combustible de la centrale nucléaire.

## Claims

1. - Earthquake-resistant supporting bearing comprising a base supporting and holding (15) the bearing (B) on a supporting surface (1a), at least one spherical rolling member (16) mounted so as to rotate freely about a centre of rotation in a bearing (17) incorporated with the supporting base (15) and a supporting plate (18) resting on the spherical rolling member (16) through the intermediary of a concave bearing surface (18a), **characterised in that** the supporting base (15) comprises a supporting sole (20) incorporated with at least one bearing (17) constructed in such a way as to rest freely on the supporting surface (1a) and hold the bearing (8) in place without means of attachment to the supporting surface (1a), and **in that** the supporting bearing (8) comprises means (24) for suspending the supporting base (15) from the supporting plate (18) and for resilient return of the supporting plate (18) in directions which are radial to an axis (22') which is substantially perpendicular to the supporting sole (20) connected to both the supporting plate (18) and the supporting base (15) comprising the supporting sole (20) and the bearing (17).

2. - Supporting bearing according to claim 1, **characterised in that** the concave bearing surface (18a) of the supporting plate (18) on the spherical rolling member (16) is a surface of revolution having one of the following forms: spherical, conical, paraboloidal, ellipsoidal.

3. - Earthquake-resistant supporting bearing according to either of claims 1 and 2, **characterised in that** it comprises a single spherical rolling member (16) rotatably mounted within a ball bearing assembly (17) having a centre of rotation located on the axis (22') of the supporting plate (18).

4. - Earthquake-resistant supporting bearing according to either of claims 1 and 2, **characterised in that** it comprises a plurality of spherical rolling members (16a, 16b, 16c, 16d, 16e, 16f, 16g) each located in a bearing (17a, 17b, 17c, 17d, 17e, 17f, 17g), the centres of rotation of the bearings (17a, 17b, 17c, 17d, 17e, 17f, 17g) being located on at least one circle centered on the axis (22') of the plate (18).

5. - Earthquake-resistant supporting bearing according to claim 4, **characterised in that** one of the central bearings (17a) has a centre of rotation along the axis (22') of the plate (18) and the other bearings of the plurality of bearings (17a, 17b, 17c, 17d, 17e, 17f, 17g) are located about the axis (22') in such a way that the centres of rotation of the spherical rolling members (16b, 16g) of the other bearings of the plurality of bearings are located on a circle centered on the centre of rotation of the central bearing (17a).

6. - Bearing according to any one of claims 1 to 5, **characterised in that** the suspension and resilient return means (24) comprise at least three helical springs (24) each connected at one longitudinal extremity to a peripheral part (18b) of the supporting plate (18) and at a second longitudinal extremity to an outer peripheral part of the supporting base (15) located within the peripheral part (18b) of the supporting plate (18), each of the springs (24) having a substantially radial longitudinal direction in relation to the plate (18) and an upward inclination from the outer peripheral part of the supporting base (15) towards the peripheral part (18b) of the plate (18), the springs (24) being pretensioned in such a way as to ensure that the supporting base (15) of the bearing (17) and the rolling member (16) are resiliently returned to a centre position with respect to the axis (22') of the supporting plate (18) and place the spherical rolling member (16) in contact with an inner bearing surface (18a) of the plate (18) when the sole (20) is not in contact with a supporting surface (1a), the supporting base (15) being freely suspended from the plate (18) by means of the springs (24).

7. - Earthquake-resistant supporting bearing according to any one of claims 1 to 6, **characterised in that** the supporting plate (18) comprises an upper part (18c) in the form of a socket having as its axis the axis (22') of the supporting plate (18), threaded internally over at least part of its length and incorporating a guide groove (18d) which opens out onto its outer lateral surface in the direction of the axis (22') of the supporting plate (18) and **in that** the earthquake-resistant bearing (8) has in addition an operating shaft (26) having a threaded portion (26a) screwed into the threaded part (18'c) of the socket (18c) in the plate (18) in the direction of the axis (22) of the plate and at least one engaging and guiding component member (28, 29) in which the said shaft (26) is mounted so as to rotate about the axis (22') of the supporting plate (18) and in linear movement constitutes one entity with at least one engaging and guiding component (28, 29) comprising a guide member (30) having a guide pin inserted into the groove (18d) of the socket (18c) in the plate (18) in order to guide it in axial linear motion, rotation of the shaft (26) which in linear movement constitutes one entity with the at least one engaging and guiding component (28, 29) in the directions of screwing in or screwing out within the threaded opening (18'c) of the socket (18c) of the plate causing linear movement of the engaging and guiding component (28, 29) in the direction of the axis (22') of the plate in relation to the supporting plate (18).

8. - Supporting means (5) for a structure (2a) of a transportable unit (2) which can be placed on a supporting surface (1a), **characterised in that** it comprises at least three earthquake-resistant supporting bearings (8) according to any one of claims 1 to 7 and a rigid frame (10) resting on the supporting plates (18) of the earthquake-resistant bearings (8).

9. - Supporting means (5) according to claim 8 through which a slender structure (2a) of a unit (2) incorporated with the supporting means (5) can be adjusted in the vertical, **characterised in that** it comprises at least one adjustable earthquake-resistant bearing (8) according to claim 7 whose engaging and guidance member (28, 29) is incorporated with the rigid frame (10) of the supporting means (5) and can move linearly in the direction of the axis (22') of the supporting plate (18) of the earthquake-resistant bearing (8) through rotation of the operating shaft (26).

10. - Supporting means (5) according to claim 9, **characterised in that** it comprises a frame (10) of generally square or rectangular shape and four adjustable earthquake-resistant bearings (8) each attached to one corner part of the frame (10) through the respective engaging and guidance component (28, 29).

11. - Use of supporting means according to any one of claims 8 to 10 to support a nuclear fuel assembly examination and inspection unit (2) in the pool (1) of a nuclear power station, the unit (1) being wholly independent and being capable of being installed in the pool (1) of a nuclear power station without preparation because it is intended to rest on the base of the pool (1) through soles (20) of the supporting means (5) and in that it incorporates its own means (3) for handling fuel assemblies, thus making it independent of all the fuel assembly handling means of the nuclear power station.

## Patentansprüche

1. Erdbebensicherer Stützfuß, einen Stütz- und Haltesockel (15) dieses Stützfußes (8) auf einer Auflagefläche (1a), mindestens ein kugelförmiges Rollelement (16), frei um einen Drehpunkt drehbar in ein fest mit dem Stützsockel (15) verbundenes Lager (17) montiert, sowie eine Tragplatte (18) umfassend, die mit einer konkaven Stützfläche (18a) auf dem kugelförmigen Rollelement (16) ruht,
**dadurch gekennzeichnet, dass** der Stützsockel (15) eine fest mit mindestens einem Lager (17) verbundene Stützsohle (20) umfasst, so realisiert, dass sie frei auf der Auflagefläche (1a) ruht und den Stützfuß (8) ohne Befestigungsmittel auf der Auflagefläche (1a) in Stellung hält, und dass der Stützfuß (8) Einrichtungen (24) zur Aufhängung des Stützsockels (15) an der Tragplatte (18) und zur elastischen Rückstellung in radialen Richtungen um eine im Wesentlichen zu der Stützsohle (20) senkrechte Achse (22') der Tragplatte (18) herum umfasst, die einerseits mit der Tragplatte (18) und andererseits mit dem die Stützsohle (20) und das Lager (17) umfassenden Stützsockel (15) verbunden sind.

2. Erdbebensicherer Stützfuß nach Anspruch 1, **dadurch gekennzeichnet, dass** die konkave Stützfläche (18a) der Tragplatte (18) auf dem kugelförmigen Rollelement (16) eine Rotationsfläche mit einer der folgenden Formen ist: sphärisch, konisch, paraboloidisch, ellipsoidisch.

3. Erdbebensicherer Stützfuß nach einem der Ansprüche 1 und 2, **dadurch gekennzeichnet, dass** er ein einziges, in einem Kugellager (17) drehbares kugelförmiges Rollelement (16) umfasst, dessen Drehpunkt in der Achse (22') der Tragplatte (18) liegt.

4. Erdbebensicherer Stützfuß nach einem der Ansprüche 1 und 2, **dadurch gekennzeichnet, dass** er eine Vielzahl kugelförmiger Rollelemente (16a, 16b, 16c, 16d, 16e, 16f, 16g) umfasst, jedes angeordnet in einem Lager (17a, 17b, 17c, 17d, 17e, 17f, 17g), wobei die Drehpunkte der Lager (17a, 17b, 17c, 17d, 17e, 17f, 17g) auf wenigstens einem auf die Achse (22') der Tragplatte (18) zentrierten Kreis liegen.

5. Erdbebensicherer Stützfuß nach Anspruch 4, **dadurch gekennzeichnet, dass** eines der Lager, nämlich das zentrale (17a), einen Drehpunkt entsprechend der Achse (22') der Platte (18) aufweist, und die anderen Lager aus der Vielzahl von Lagern (17a, 17b, 17c, 17d, 17e, 17f, 17g) so um die Achse (22') herum angeordnet sind, dass die Drehpunkte der kugelförmigen Rollelemente (16b-16g) der anderen Lager aus der Vielzahl von Lagern auf einem Kreis angeordnet sind, dessen Mittelpunkt der Drehpunkt des zentralen Lagers (17a) ist.

6. Erdbebensicherer Stützfuß nach einem der Ansprüche 1 bis 5, **dadurch gekennzeichnet, dass** die elastischen Aufhäng- und Rückstelleinrichtungen (24) durch wenigstens drei Spiralfedern (24) gebildet werden, von denen jede mit einem ersten Längsende mit einem peripheren Teil (18b) der Tragplatte (18) verbunden ist, und mit einem zweiten Längsende mit der Außenseite des Stützsockels (15) verbunden ist, der sich innerhalb des peripheren Teils (18b) der Platte (18) befindet, wobei jede der Federn (24) in Bezug auf die Platte (18) eine im Wesentlichen radiale Längsrichtung hat und von der Außenseite des Stützsockels (15) in Richtung peripherer Teil (18b) der Platte (18) nach oben geneigt ist, wobei die Federn (24) vorgespannt sind auf Zug, um den Stützsockel (15) des Lagers (17) und des kugelförmigen Rollelements (16) zurückzustellen in die auf die Achse (22') zentrierte Position der Platte (18), und um das kugelförmige Rollelement (16) mit einer inneren Stützfläche (18a) der Platte (18) in Kontakt zu halten, wenn die Sohle (20) keinen Kontakt mit einer Auflagefläche (1a) hat und der Stützsockel (15) durch die Federn (24) frei aufgehängt ist an der Platte (18).

7. Erdbebensicherer Stützfuß nach einem der Ansprüche 1 bis 6, **dadurch gekennzeichnet, dass** die Tragplatte (18) einen buchsenförmigen Oberteil (18c) mit - als Achse - der Achse (22') der Tragplatte (18) umfasst, der über wenigstens einen Teil seiner Länge ein Innengewinde sowie auf seiner Außenseite eine Führungsnut (18d) mit der Richtung der Achse (22') der Tragplatte (18) aufweist, und dass der erdbebensichere Stützfuß (8) zudem eine Betätigungsspindel (26) mit einem in der Richtung der Achse (22) der Platte (18) in das Innengewinde (18'c) der Buchse (18c) der Platte geschraubten Gewindeteil (26a) umfasst sowie wenigstens ein Einführungs- und Führungsteil (28, 29), in das die Spindel (26) montiert ist, drehbar um die Achse (22') der Tragplatte (18) und parallelverschiebungsfest verbunden mit wenigstens einem Führungsteil (28, 29), das ein Führungselement (30) mit einem Führungsstift umfasst, der in der Nut (18d) der Buchse (18c) der Platte (18) sitzt und ihre axiale Parallelverschiebung führt, wobei eine Rotation der mit wenigstens einem Einführungs- und Führungsteil (28, 29) parallelverschiebungsfest verbundenen Spindel (26) in der Hinein- oder Herausschraubrichtung in Bezug auf das Innengewinde (18'c) der Buchse (18c) der Platte eine Parallelverschiebung des Einführungs- und Führungsteils (28, 29) in der Richtung der Achse (22') der Platte in Bezug auf die Platte (18) zur Folge hat.

8. Abstützungsvorrichtung (5) einer Struktur (2a) einer transportablen Installation (2), die auf einer Auflagefläche (1a) in Stellung gebracht werden kann, **dadurch gekennzeichnet, dass** sie wenigstens drei erdbebensichere Stützfüße (8) nach einem der Ansprüche 1 bis 7 und einen steifen Rahmen (10) umfasst, der auf den Tragplatten (18) der erdbebensicheren Stützfüße (8) ruht.

9. Abstützungsvorrichtung (5) nach Anspruch 8, die das Richten der Vertikalität einer mit der Abstützungsvorrichtung (5) fest verbundenen hochaufragenden Struktur (2a) einer Installation (2) ermöglicht, **dadurch gekennzeichnet, dass** sie wenigstens einen verstellbaren erdbebensicheren Stützfuß (8) nach Anspruch 7 umfasst, dessen Einführungs- und Führungsteil (28, 29) fest mit dem steifen Rahmen (10) der Abstützungsvorrichtung (5) verbunden ist und in der Richtung der Achse (22') der Tragplatte (18) des erdbebensicheren Stützschuhs (8) parallelverschiebbar ist, indem man die Betätigungsspindel (26) in Drehung versetzt.

10. Abstützungsvorrichtung (5) nach Anspruch 9, **dadurch gekennzeichnet, dass** sie einen Rahmen (10) von generell quadratischer oder rechteckiger Form und vier verstellbare erdbebensichere Stützfüße (8) umfasst, von denen jeder durch das jeweilige Einführungs- und Führungsteil (28, 29) mit einem Winkelteil des Rahmens (10) verbunden ist.

11. Nutzanwendung einer Abstützungsvorrichtung nach einem der Ansprüche 8 bis 10 für das Abstützen einer Installation (2) zur Untersuchung und Kontrolle von Brennelementen in einem Becken (1) eines Kernkraftwerks, wobei die Installation (2) total autonom bzw. selbstständig ist und ohne Umbau bzw. Anpassung in dem Becken (1) des Kernkraftwerks installiert werden kann, da sie mittels Sohlen (20) der Abstützungsvorrichtung (5) auf dem Boden des Beckens (1) ruht und für das Handling der Brennelemente eigene Einrichtungen (3) umfasst, die ermöglichen, sich frei zu machen von allen Brennelementhandlingseinrichtung des Kernkraftwerks.
